# EUROPEAN PATENT APPLICATION

(11) **EP 4 491 851 A1**
(43) Date of publication of application: **15.01.2025**
(21) Application number: 24187423.9
(22) Date of filing: 09.07.2024
(51) Int. Cl.: F01D 9/06, F01D 25/12

(54) **GAS TURBINE CONDUIT WITH HEAT TRANSFER PROTRUSIONS ON THE SURFACE STRUCTURE**

(30) Priority: 14.07.2023 US 202318352878
(71) Applicant: RTX Corporation, Farmington, CT 06032 (US)
(72) Inventor: AVIDANE, Orin G., Lighthouse Point (US); VINCENT, Tyler G., Portland (US); GAN, Subhadeep, Middletown (US); GLAHN, Jorn A., Manchester (US)
(74) Representative: Dehns

(57) **Abstract**

A turbine engine (20) including one or more conduits (204, 206, 208, 210, 212) is disclosed herein. At least one conduit (206) of the turbine engine (20) includes a first end coupled to the turbine engine (20), a second end, and a body (206c) extending from the first end to the second end, the body (206c) including an interior surface and an exterior surface, wherein at least one of the interior surface or the exterior surface includes a protrusion configuration (301).

## Description

### TECHNCIAL FIELD

The present disclosure generally relates to conduits of a turbine engine, and, more specifically, to conduits that transport fluids to various parts of the turbine engine.

### BACKGROUND

A gas turbine engine typically includes a fan section, a compressor section, a combustor section, and a turbine section. In general, during operation, air is pressurized in the fan and compressor sections, and is mixed with fuel, and burned in the combustor section to generate hot combustion gases. The hot combustion gases flow through the turbine section, which extracts energy from the hot combustion gases to power the compressor section and other gas turbine engine loads.

### SUMMARY

According to an aspect of the invention, a conduit of a turbine engine is disclosed herein. The conduit includes a first end coupled to the turbine engine, a second end, and a body extending from the first end to the second end, the body including an interior surface and an exterior surface, wherein at least one of the interior surface or the exterior surface includes a protrusion configuration.

In various embodiments, the protrusion configuration comprises a plurality of protrusions spaced apart axially along the interior surface. In various embodiments, the protrusion configuration comprises rows of the plurality of protrusions spaced apart laterally along the interior surface. In various embodiments, each protrusion in the plurality of protrusions comprises a first diameter in a X-direction, a second diameter in a Y-direction, and a height of protrusion, the height of protrusion measured from the interior surface to a maximum height of the protrusion and the first diameter in the X-direction and the second diameter in the Y-direction are each between 0.007 inches (0.18 cm) and 2.9 inches (7.4 cm), and the height of protrusion is between 0.001 inches (0.0025 cm) and 1.3 inches (3.3 cm).

In various embodiments, each protrusion in the plurality of protrusions includes a continuous rib and the continuous rib extends in one of a circumferential direction around the interior surface or an angled direction relative to the circumferential direction. In various embodiments, each protrusion in the plurality of protrusions includes a broken rib and the broken rib forms one of a V-shape, an angled circumferential and longitudinal line, and a circumferential line on the interior surface.

In various embodiments, the protrusion configuration comprises a plurality of protrusions spaced apart axially along the interior surface. In various embodiments, the protrusion configuration includes a first protrusion configuration is disposed on the exterior surface adjacent the first end and a second protrusion configuration disposed on the interior surface adjacent the second end.

According to an aspect of the invention, also disclosed herein is a gas turbine engine including a fan section, a turbine section, and a conduit coupled to the fan section and the turbine section. The conduit includes an inlet coupled to the turbine section, an outlet coupled to the fan section, and a body extending between the inlet and the outlet, the body including a protrusion configuration along one of an exterior surface of the body or an interior surface of the body.

In various embodiments, the protrusion configuration comprises a plurality of protrusions spaced apart axially along the exterior surface. In various embodiments, the protrusion configuration comprises rows of the plurality of protrusions spaced apart circumferentially along the exterior surface. In various embodiments, each protrusion in the plurality of protrusions comprises a first diameter in a X-direction, a second diameter in a Y-direction, and a height of protrusion, the height of protrusion measured from the exterior surface to a maximum height of the protrusion and the first diameter in the X-direction and the second diameter in the Y-direction are each between 0.007 inches (0.18 cm) and 2.9 inches (7.4 cm), and the height of protrusion is between 0.001 inches (0.0025 cm) and 1.3 inches (3.3 cm). In various embodiments, each protrusion in the plurality of protrusions includes one of a continuous rib and a broken rib.

According to an aspect of the invention , also disclosed herein is a gas turbine engine including a first section, a second section adjacent the first section, and a conduit fluidly coupled to the first section and the second section. The conduit includes an inlet fluidly coupled to the first section, an outlet fluidly coupled to the second section, and a body fluidly coupled to the inlet and the outlet, the body including a protrusion configuration along at least one of an interior surface of the body or an exterior surface of the body.

In various embodiments, the protrusion configuration comprises a plurality of protrusions spaced apart axially along the exterior surface. In various embodiments, each protrusion in the plurality of protrusions comprises a first diameter in a X-direction, a second diameter in a Y-direction, and a height of protrusion, the height of protrusion measured from the exterior surface to a maximum height of the protrusion and the first diameter in the X-direction and the second diameter in the Y-direction are each between 0.007 inches (0.18 cm) and 2.9 inches (7.4 cm), and the height of protrusion is between 0.001 inches (0.0025 cm) and 1.3 inches (3.3 cm).

In various embodiments, the protrusion configuration includes a plurality of protrusions spaced apart axially along the interior surface. In various embodiments, the conduit is configured to receive a first fluid from the first section and supply the first fluid to the second section. In various embodiments, heat is transferred from the first fluid in transit from the first section to the second section. In various embodiments, the first section is one of a fan section, a compressor section, a combustor section, and a turbine section, and wherein the second section is one of the fan section, the compressor section, the combustor section, and the turbine section.

The foregoing features and elements may be combined in any combination, without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1 illustrates a cross-sectional view of an exemplary gas turbine engine, in accordance with various embodiments.
FIG. 2A illustrates a side view of a gas turbine engine including exemplary conduits, in accordance with various embodiments.
FIG. 2B illustrates a perspective view of a gas turbine engine including exemplary conduits, in accordance with various embodiments.
FIG. 3A illustrates a top view of an interior surface with a protrusion configuration, in accordance with various embodiments.
FIG. 3B illustrates a cross-sectional view of the interior surface with a protrusion of the protrusion configuration, in accordance with various embodiments.
FIG. 3C illustrates an elliptical view of the interior surface with a protrusion of the protrusion configuration, in accordance with various embodiments.
FIG. 4 illustrates various protrusion configurations, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. While these exemplary embodiments are described in sufficient detail to enable those skilled in the art to practice the invention, it should be understood that other embodiments may be realized and that logical, chemical and mechanical changes may be made without departing from the scope of the invention. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

Throughout the present disclosure, like reference numbers denote like elements. Accordingly, elements with like element numbering may be shown in the figures, but may not necessarily be repeated herein for the sake of clarity.

As used herein, "aft" refers to the direction associated with the tail (e.g., the back end) of an aircraft, or generally, to the direction of exhaust of a gas turbine engine. As used herein a "conduit" includes a tube (e.g., with a circular cross-sectional shape, a racetrack cross-sectional shape, a non-uniform cross-sectional shape etc.). As referred to herein, a "manifold" is integral (i.e., formed from a single piece, or monolithic) with a housing of a heat exchanger. Stated another way, a "manifold" as referred to herein defines an inlet or an outlet of a heat exchanger (e.g., an inlet or an outlet to a heat transfer region of a heat exchanger), in accordance with various embodiments. A "conduit" as referred to herein can include a tube with a circular cross-sectional shape. In this regard, an interior surface can be defined by an inner diameter surface of a tube, and an exterior surface can be defined by an outer diameter surface of the tube, in accordance with various embodiments. In various embodiments, for a tube that is non-uniform or includes a race track shape, the tube can still include a central longitudinal axis that defines a centerline of the respective tube. In this regard, an interior surface can be defined by an inner surface of the tube and an exterior surface can be defined by an outer surface of the tube (i.e., a surface closer in proximity to the central longitudinal axis is the inner surface and is relative to an exterior surface, or outer surface).

A first component that is "radially outward" of a second component means that the first component is positioned at a greater distance away from a central longitudinal axis of the gas turbine engine. A first component that is "radially inward" of a second component means that the first component is positioned closer to the engine central longitudinal axis than the second component. The terminology "radially outward" and "radially inward" may also be used relative to reference axes other than the engine central longitudinal axis.

Disclosed herein are systems and apparatuses for improving durability and thermal response of conduits and manifolds and adjacent components thereof. Although disclosed herein with reference to gas turbine engines, the present disclosure is not limited in this regard. For example, any conduit, manifold, inlet tube, and/or outlet tube used in any type of application is within the scope of this disclosure. Generally, the thermal response rate of inlet tubes, outlet tubes, conduits, and/or manifolds that bring hot and/or cold fluids into and out of turbine engine areas may be slow enough to cause large thermal gradients between inlets and outlets, including in bearing compartments and buffer systems. In various embodiments, these large thermal gradients may induce high stress in the components of the turbine engine. Disclosed herein are inlet tubes, outlet tubes, conduits, and manifolds including various shaped protrusions along the exterior surfaces thereof. In various embodiments, the various shaped protrusions may effectively act as heat transfer surfaces. In various embodiments, the protrusion configuration is configured to reduce a transient response time of the respective inlet tube, outlet tube, conduit, and/or manifold. Stated another way, the protrusion configuration can prevent a structural concern arising from thermal stress due to a temperature difference between the inlet, or hot side, and the outlet, or cold side. In this regard, the protrusion configuration may reduce a stress (i.e., a stress due to low-cycle fatigue, stress from a transient condition, or the like) during operation. In various embodiments, the protrusion configuration can be configured to reduce thermal gradients in increasing temperature transient or in a decreasing temperature transient. The present disclosure is not limited in this regard.

In various embodiments, the inlet tube, outlet tube, conduit, and/or manifold may be integral and monolithic with the turbine engine. In various embodiments, the inlet tube, outlet tube, conduit, and/or manifold may be configured to be coupled to a heat exchanger, a fan section, a turbine section, a compressor section, and/or other sections of the turbine engine. The present disclosure is not limited in this regard.

Inlet tubes, outlet tubes, conduits, and/or manifolds, hereinafter referred to as conduits, as disclosed herein, are configured, in various embodiments, to transfer fluids (e.g., liquid, air, etc.) from a first section of the turbine engine to a second section of the turbine engine. In various embodiments, the first section has a higher temperature than the second section, resulting in a thermal gradient. Typically, the conduits are not designed or configured with heat transfer features. However, by adding a protrusion configuration as disclosed herein selectively to the conduits in a turbine engine, a temperature gradient of the respective conduit can be reduced, with a potential minor degradation in performance, and in turn a stress of the conduit can be reduced, resulting in a more durable conduit, in accordance with various embodiments. Stated another way, conduits that transfer a large amount of heat can result in significant temperature gradients between the connected sections of the turbine engine which can cause structural concerns (e.g., low-cycle fatigue or the like) due to differences in thermal growth between the two. To address these structural concerns, a protrusion configuration can be added to a respective conduit to reduce stress, with a potential minor increase in pressure loss. In various embodiments, the enhanced heat transfer that results from the protrusion configuration in the manifold may improve the performance of the turbine engine while reducing stress and increasing durability.

In various embodiments, the protrusion configuration can be on an interior surface of a respective conduit and/or an exterior surface of a respective conduit. In various embodiments, by providing the protrusion configuration on an interior surface of the conduit, a thermal response rate of the conduit can be increased, thereby increasing performance and/or the protrusion configuration can increase a heat transfer of the conduit, thereby increasing performance. In various embodiments, by having the protrusion configuration on an exterior surface of a respective conduit, a thermal gradient between the sections of the turbine engine along the respective conduit can be reduced, thereby significantly reducing stress and/or increasing durability.

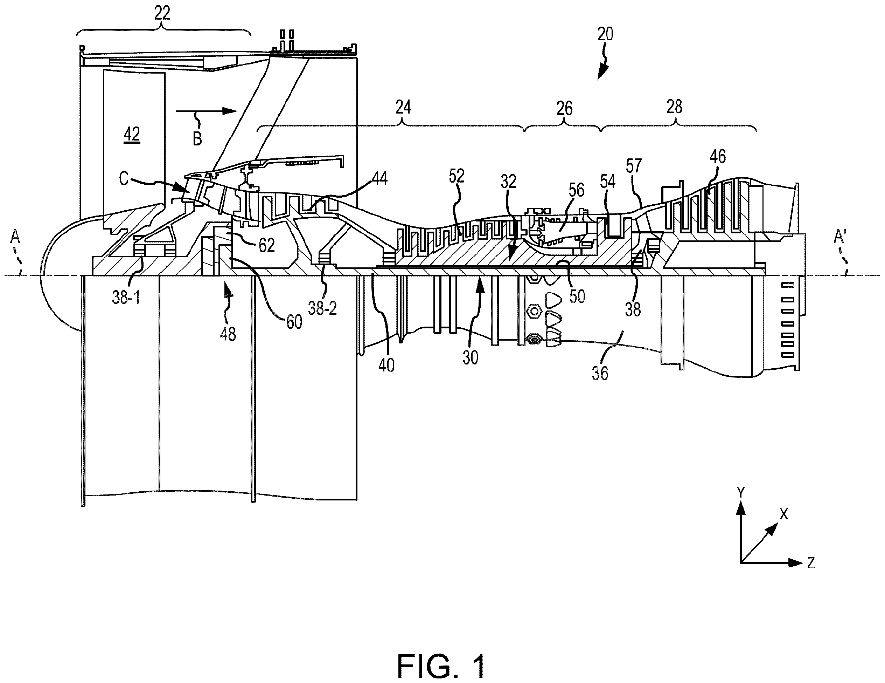

In various embodiments and with reference to FIG. 1, a gas turbine engine 20 is provided. Gas turbine engine 20 may generally include a fan section 22, a compressor section 24, a combustor section 26, and a turbine section 28. In operation, fan section 22 drives fluid (e.g., air) along a bypass flow-path B, while compressor section 24 drives fluid along a core flow-path C for compression and communication into combustor section 26 and then expansion through turbine section 28. Although gas turbine engine 20 is depicted as a turbofan gas turbine engine herein, it should be understood that the concepts described herein are not limited to use with turbofans as the teachings may be applied to other types of turbine engines.

Gas turbine engine 20 may generally comprise a low-speed spool 30 and a high-speed spool 32 mounted concentrically, via bearing systems 38, for rotation about engine central longitudinal axis A-A' and relative to an engine static structure 36. It should be understood that various bearing systems 38 at various locations may alternatively or additionally be provided, including for example, bearing system 38, bearing system 38-1, and bearing system 38-2. Engine central longitudinal axis A-A' is oriented in the z-direction on the provided X-Y-Z axes. The z-direction on the provided X-Y-Z axes refers to the axial direction. As used herein, the term "radially" refers to directions towards and away from engine central longitudinal axis A-A' and the z-axis. As used herein, the terms "circumferential" and "circumferentially" refer to directions about central longitudinal axis A-A' and the z-axis.

Low speed spool 30 may generally comprise an inner shaft 40 that interconnects a fan 42, a low-pressure compressor 44, and a low-pressure turbine 46. Inner shaft 40 may be connected to fan 42 through a geared architecture 48 that can drive fan 42 at a lower speed than low speed spool 30. Geared architecture 48 may comprise a gear assembly 60 enclosed within a gear housing 62. Gear assembly 60 couples inner shaft 40 to a rotating fan structure. High-speed spool 32 may comprise an outer shaft 50 that interconnects a high-pressure compressor 52 and a high-pressure turbine 54. A combustor 56 may be located between high-pressure compressor 52 and high-pressure turbine 54. A mid-turbine frame of engine static structure 36 may be located generally between high-pressure turbine 54 and low-pressure turbine 46. The mid-turbine frame may support one or more bearing systems 38 in turbine section 28. Inner shaft 40 and outer shaft 50 may be concentric and rotate via bearing systems 38 about engine central longitudinal axis A-A', which is collinear with their longitudinal axes. As used herein, a "high pressure" compressor or turbine experiences a higher pressure than a corresponding "low pressure" compressor or turbine. The airflow in core flow-path C may be compressed by low-pressure compressor 44 and high-pressure compressor 52, mixed and burned with fuel in combustor 56, then expanded over high-pressure turbine 54 and low-pressure turbine 46. Turbines 46, 54 rotationally drive the respective low speed spool 30 and high-speed spool 32 in response to the expansion.

Compressor section 24, combustor section 26, and turbine section 28 are generally referred to as the engine core. Air is drawn into gas turbine engine 20 through fan 42. Air exiting fan 42 may be divided between core flow-path C and bypass flow-path B. The airflow in bypass flow-path B may be utilized for multiple purposes including, for example, cooling and pressurization.

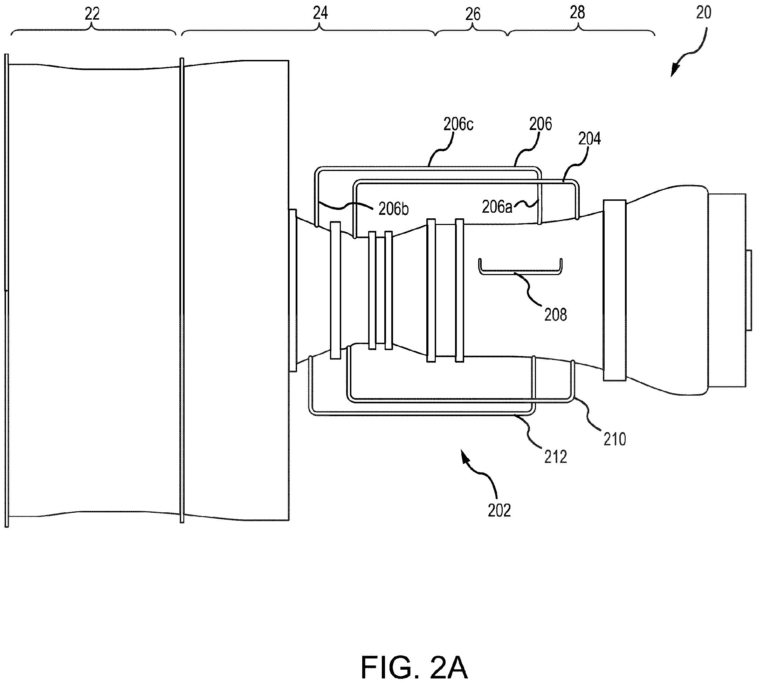

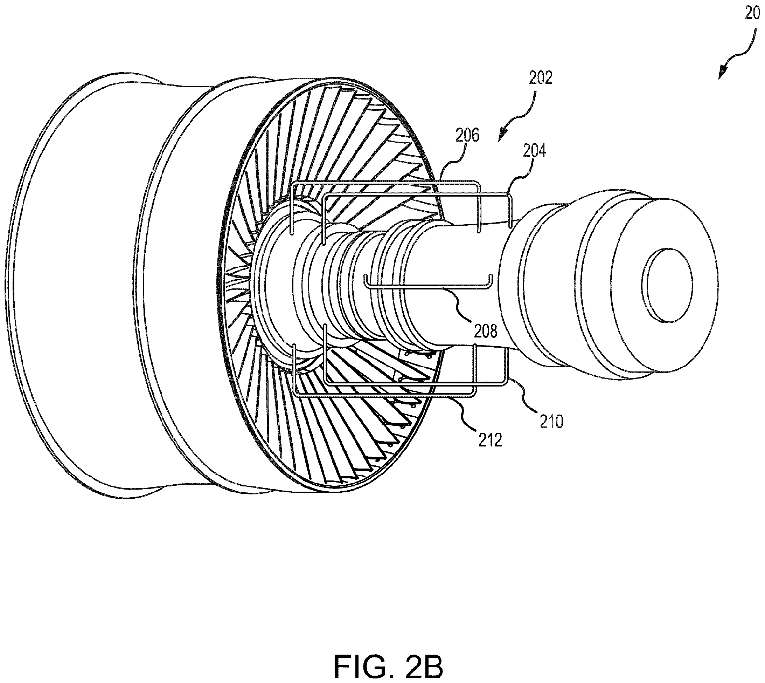

Referring now to FIGS. 2A and 2B, and with continued reference to FIG. 1, gas turbine engine 20 including a plurality of conduits 202 is illustrated, in accordance with various embodiments. FIG. 2A is a side view of gas turbine engine 20 and the plurality of conduits 202 and FIG. 2B is a perspective view of gas turbine engine 20 and the plurality of conduits 202. In various embodiments, the plurality of conduits 202 may be examples of conduits, inlet tubes, outlet tubes, and/or manifolds, among others, and will be referred to hereinafter as conduits for simplicity. The plurality of conduits 202 includes a first conduit 204, a second conduit 206, a third conduit 208, a fourth conduit 210, and a fifth conduit 212. Each of the plurality of conduits 202 connects different sections of gas turbine engine 20 (e.g., fan section 22, compressor section 24, combustor section 26, turbine section 28). Each of the plurality of conduits 202 includes an inlet, an outlet, and a body. For example, second conduit 206 includes an inlet 206a, an outlet 206b, and a body 206c extending between and coupled to inlet 206a and outlet 206b. The illustrated plurality of conduits 202 are for illustrative and discussion purposes and are not intended to be limiting in scope as to number, location, and/or size of the plurality of conduits 202 possible and used on gas turbine engine 20.

In various embodiments, first conduit 204 is connected from a first location in turbine section 28 to a first location in compressor section 24. In various embodiments, second conduit 206 is connected from a second location in turbine section 28 to a second location in compressor section 24. In various embodiments, third conduit 208 is connected from turbine section 28 to combustor section 26. In various embodiments, fourth conduit 210 is connected from a fourth location in turbine section 28 to a fourth location in compressor section 24. In various embodiments, fifth conduit 212 is connected from a fifth location in turbine section 28 to a fifth location in compressor section 24. In various embodiments, first conduit 204 may be a supply conduit and fourth conduit 210 may be a return conduit. In various embodiments, second conduit 206 may be a supply conduit and fifth conduit 212 may be a return conduit. In various embodiments, one or more of conduits 204, 206, 208, 210, 212 may be connected at one end to gas turbine engine 20 at one end and connected to a component that is external to gas turbine engine 20. As such, it will be appreciated that FIGS. 2A and 2B are for description purposes and are not intended to be limiting as to the location, placement, and/or connections of the various conduits, including conduits 204, 206, 208, 210, 212.

In various embodiments, one or more of the plurality of conduits 202 may receive hot air at an inlet which may be cooled before reaching an outlet of the one or more plurality of conduits 202. In various embodiments, each of the plurality of conduits 202 may be integral to gas turbine engine 20. "Integral," as referred to herein is a monolithic component (i.e., formed from a single-piece of a material). In various embodiments, hot air may flow through one or more of the plurality of conduits 202 in an axial direction. In various embodiments, hot air may flow through one or more of the plurality of conduits 202 in a circumferential direction. In various embodiments, the fluid transferred by the plurality of conduits 202 may be air, water, fuel, oil, or any other fluid utilized in gas turbine engine 20. In various embodiments, each of the plurality of conduits 202 including first conduit 204, second conduit 206, third conduit 208, fourth conduit 210, and fifth conduit 212 includes an interior surface and an exterior surface.

The plurality of conduits 202 are typically designed and configured to provide a desired flow of fluid from a first section of gas turbine engine 20 to a second section of gas turbine engine 20. Accordingly, the plurality of conduits 202 are typically not designed or configured with heat transfer features, such as turbulators, fins, protrusions, corrugations, etc. However, by adding a protrusion configuration as disclosed herein selectively to the plurality of conduits 202, a temperature gradient of the respective conduit or conduits may be reduced, with a potential minor hit to performance (or minor improvement to performance), and in turn a stress of the respective conduit or conduits may be reduced (i.e., due to a reduction in thermal stress by reducing a temperature gradient), resulting in a more durable conduits, in accordance with various embodiments. Stated another way, the plurality of conduits 202 that transfer heat fluids, may result in significant temperature gradients in the conduits which may cause structural concerns. The protrusion configuration may also be referred to as a plurality of protrusions, an array of protrusions, and/or a grouping of protrusions. In various embodiments, the protrusion configuration is a repeatable plurality of protrusions, array of protrusions, and/or grouping of protrusions. To address the structural concerns, a protrusion configuration can be added to a respective conduit (e.g., first conduit 204) to reduce stress, with a potential minor performance degradation (or potential minor performance improvement), to facilitate greater amounts of heat transfer per unit time in the respective conduit. Stated another way, increased heat transfer can be achieved in the respective conduit indirectly, even with a performance degradation by alleviating structural concerns with a protrusion configuration on an interior surface or an exterior surface of one or more of the plurality of conduits 202 (e.g., conduits 204, 206, 208, 210, 212).

In various embodiments, by providing the protrusion configuration on an interior surface of one or more of the plurality of conduits 202, a thermal response rate of each conduit may be increased, thereby increasing performance and/or the protrusion configuration can increase a heat transfer of each conduit, thereby increasing performance. In various embodiments, by having the protrusion configuration on an exterior surface of one or more of the plurality of conduits 202, a thermal gradient between the heat inlet and the outlet of the respective conduit may be reduced, thereby significantly reducing stress and/or increasing durability. In various embodiments, the protrusion configuration may extend the entire length of the conduit (e.g., second conduit 206). In various embodiments, a first protrusion configuration may be disposed on an interior surface of the body (e.g., body 206c) adjacent the inlet (e.g., inlet 206a) and a second protrusion configuration may be disposed on an exterior surface of the body adjacent the outlet (e.g., outlet 206b).

In various embodiments, a fluid is supplied through a conduit of the plurality of conduits 202 (e.g., first conduit 204) with the fluid having a first temperature and the conduit including a protrusion configuration on the exterior surface and/or the interior surface. As the fluid traverses the conduit including the protrusion configuration, the fluid transitions from the first temperature to a second temperature that is cooler than the first temperature. Stated another way, the inlet temperature of the fluid is greater than the outlet temperature of the fluid. For example, the fluid entering the conduit (e.g., first conduit 204) may be about 10° F (5.6° C) above average engine operating temperature and the fluid exiting the conduit may be about 10° F (5.6° C) below average engine operating temperature.

In various embodiments, the protrusion configuration described herein can result in a pressure loss in the respective fluid conduit, which is typically undesirable. However, the tradeoff is that the protrusion configuration reduces a thermal gradient experienced by the conduit of the plurality of conduits 202, which reduces a thermal stress of the conduit, and potentially allowing a greater amount of heat transfer, in accordance with various embodiments.

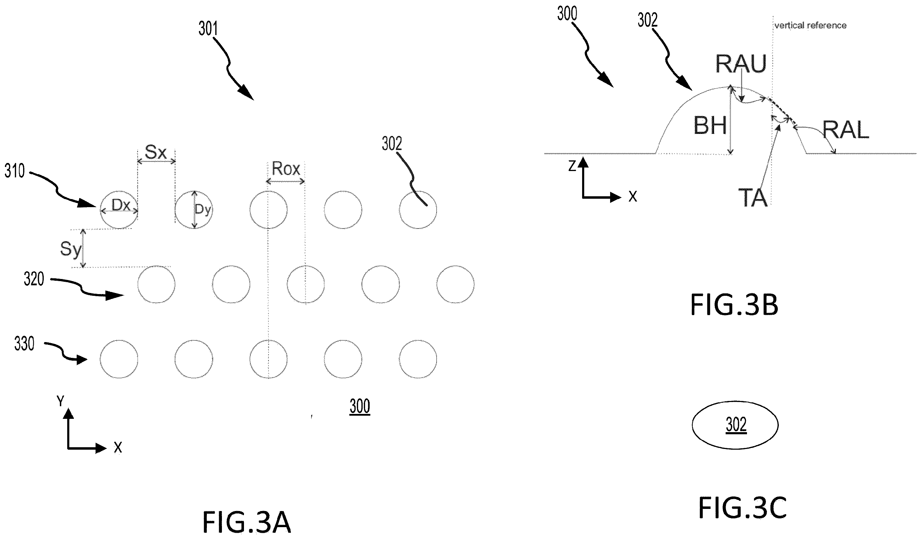

Referring now to FIGS. 3A and 3B, a top view (FIG. 3A) and a cross-sectional view (FIG. 3B) of a surface 300 is illustrated, in accordance with various embodiments. In various embodiments, the surface (e.g., an interior surface or an exterior surface) can be a cylindrical surface (e.g., for inlet 206a, outlet 206b, and/or body 206c, a flat surface (e.g., an inlet manifold or an outlet manifold), or the like. The present disclosure is not limited in this regard.

In various embodiments, the surface 300 comprises a protrusion configuration 301 with a plurality of protrusions (e.g., protrusion 302). In various embodiments, each protrusion (e.g., protrusion 302) can be the same for ease of manufacturing. However, the present disclosure is not limited in this regard, and varying protrusion sizes (i.e., diameter and height) throughout the protrusion configuration 301 is within the scope of this disclosure. In various embodiments, the protrusion 302 comprises a diameter in an X-direction ("Dx") and a diameter in a Y-direction ("Dy"). The X-direction can correspond to an axial direction, and the Y-direction can correspond to a circumferential direction (i.e., for a fluid conduit) or a lateral direction (i.e., for a manifold defined by a flat surface). From a top view (FIG. 3A), the protrusion 302 can comprise an elliptical shape (e.g., as shown in FIG. 3C), in accordance with various embodiments. That is, the protrusion 302 may be an ellipsoid. Although the protrusion 302 is illustrated as an elliptical cross-section in an XY plane, the present disclosure is not limited in this regard. For example, diameter Dx can vary between 0.007 inches (0.018 cm) and 2.9 inches (7.366 cm), and diameter Dy can vary between 0.007 inches (0.018 cm) and 2.9 inches (7.366 cm), in accordance with various embodiments.

In various embodiments, protrusions 302 can be spaced apart in the X-direction ("Sx"), and the protrusions 302 can be spaced apart in the Y-direction ("Sy"). For example, Sy and Sx can each vary between 0.001 inches (.0025 cm) and 1.9 inches (4.83 cm). Although illustrated as being spaced apart equally in the x-direction and spaced apart equally in the y-direction, the present disclosure is not limited in this regard. For example, the protrusion configuration 301 can comprise arrays of protrusions (e.g., two or more protrusions 302 spaced close together (e.g., 0.001 inches (0.0025 cm) then a larger gap (e.g., 1 inch (2.34 cm)), then have the pattern repeat.

In various embodiments, the protrusion configuration 301 comprises a plurality of protrusions arranged in rows (e.g., rows 310, 320, 330 as shown in FIG. 3A). In various embodiments, adjacent rows (e.g., rows 310, 320) can be offset in an X direction ("Rox"). In various embodiments, the Rox corresponds to two times the Sx direction.

Referring now to FIG. 3B, a cross-sectional view of a protrusion 302 from FIG. 3A is illustrated, in accordance with various embodiments. In various embodiments, the protrusion 302 further comprise a ramp angle upper ("RAU"), a ramp angle lower ("RAL"), a transition angle ("TA"), and a height of protrusion (e.g., bead height, or "BH"). The RAU is an angle between the surface 300, and an exterior surface of the protrusion 302. The TA is an angle from a vertical reference (i.e., a normal direction from the surface 300), and a tangent line between a vertex defined by the protrusion 302 and the surface 300 and a point defined by the BH. The RAL is an angle between the tangent line and a horizontal plane defined by the BH.

In various embodiments, the protrusion 302 can be a partial sphere. In various embodiments, the protrusion 302 can have a height greater than diameter Dx and diameter Dy or less than diameter Dx and Dy, the present disclosure is not limited in this regard. In various embodiments, the protrusion 302 is configured to induce turbulent flow. In various embodiments, turbulent flow can result in reduced pressure loss relative to laminar flow. In various embodiments, turbulent flow can result in a reduced thermal gradient, thereby reducing a thermal stress of a conduit or manifold, in accordance with various embodiments.

In various embodiments, the RAU can be between 90 degrees and 179 degrees. In various embodiments, the RAL can be between 0 degrees and 90 degrees. In various embodiments, the TA can be between 0 degrees and 89 degrees. In various embodiments, the BE can be between 181 degrees and 270 degrees. In various embodiments, the BH can be between 0.001 inches (0.0025 cm) and 1.3 inches (3.3 cm).

In various embodiments, the surface 300 can be substantially an entire length of one or more of conduit 204, 206, 208, 210, 212, or other conduits. The present disclosure is not limited in this regard. In various embodiments, "substantially the entire length" as referred to herein is between 75% and 100% of a total length as measured from a first end of a conduit (e.g., conduit 204) to a second end of the conduit (e.g., conduit 204), in accordance with various embodiments. In various embodiments, surface 300 may be over a smaller portion of one of conduits 202 such as the first end, the second end, a middle portion, an upper portion, a lower portion, an inner surface, an outer surface, and/or smaller portions of each of these. Accordingly, it should be appreciated that protrusion configuration 301 as described herein may be implemented in a variety of different manners and that the descriptions and embodiments described herein are not intended to be limiting.

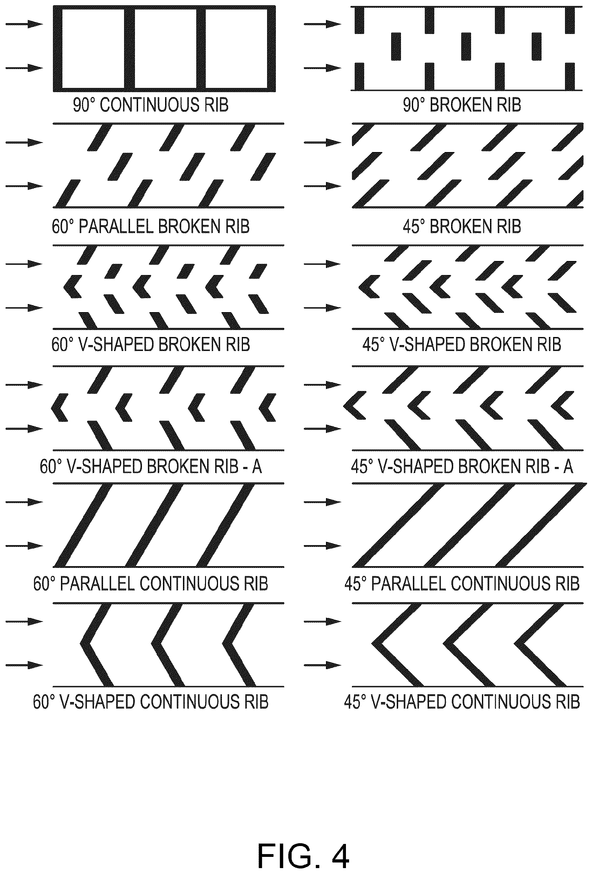

Although described herein as being bead shaped, the protrusion 302 of the protrusion configuration 301 is not limited in this regard. For example, the protrusion configuration 301 can include any protrusions as shown in FIG. 4 (e.g., a 90 degree continuous rib, a 90 degree broken rib, a 60 degree parallel broken rib, a 45 degree parallel broken rib, a 60 degree V-shaped broken rib, a 45 degree V-shaped broken rib, a 60 degree parallel continuous rib, a 45 degree parallel continuous rib, a 45 degree V-shaped continuous rib, a 45 degree continuous rib, or the like). The present disclosure is not limited in this regard. For example, a continuous rib as described herein can extend circumferentially around a surface (e.g., surface 300 from FIG. 3A), and a protrusion configuration can include a plurality of continuous ribs spaced apart longitudinally (i.e., along a central longitudinal axis) of the surface). The continuous rib can be 90 degrees (i.e., entirely circumferential), or non-90 degrees (i.e., spiraling), or the like. The present disclosure is not limited in this regard. Similarly, the broken rib configurations can include portions of a rib defined in a longitudinal and circumferential direction with respect to the surface 300 from FIG. 3A, the portions of the rib combining to form a V-shape on the surface (e.g., at an angle between 30 degrees and 90 degrees, or the like). Stated another way, the protrusions can include continuous ribs (e.g., a continuous circumferential rib), a broken rib (e.g., a rib defined by portions of the rib spaced apart circumferentially about a surface, a rib defined by portions of the rib spaced apart circumferentially and longitudinally about a surface, or the like). In various embodiments, the ribs (e.g., continuous rib, broken rib, etc.) may be evenly spaced apart. That is, there is an equal distance between each rib. In various embodiments, the ribs may be unevenly spaced apart. That is, the space between each rib various from one rib to the next. In various embodiments, the ribs may include a combination of any of the protrusions or ribs described above. In other words, the protrusions may include continuous ribs interspersed with broken ribs. Additionally, or in the alternative, the protrusions may include V-shaped ribs interspersed with 90 degree ribs. As will be appreciated, there may be many combinations of protrusions.

In various embodiments, by having a protrusion configuration 301 as disclosed herein, a thermal gradient experienced by a manifold or fluid conduit configured to supply or exhaust fluid from a heat exchanger can be reduced, thereby increasing a durability of the heat exchanger system. In various embodiments, the protrusion configuration 301 can increase a pressure loss, which may appear undesirable, but may facilitate greater heat transfer in a heat transfer region of a heat exchanger by reducing a thermal stress in the system, in accordance with various embodiments.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods, and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Numbers, percentages, or other values stated herein are intended to include that value, and also other values that are about or approximately equal to the stated value, as would be appreciated by one of ordinary skill in the art encompassed by various embodiments of the present disclosure. A stated value should therefore be interpreted broadly enough to encompass values that are at least close enough to the stated value to perform a desired function or achieve a desired result. The stated values include at least the variation to be expected in a suitable industrial process, and may include values that are within 3% of a stated value. Additionally, the terms "substantially," "about" or "approximately" as used herein represent an amount close to the stated amount that still performs a desired function or achieves a desired result. For example, the term "substantially," "about" or "approximately" may refer to an amount that is within 3% of a stated amount or value.

Furthermore, no element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above-described concepts can be used alone or in combination with any or all of the other above-described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible in light of the above teaching.

## Claims

1. A conduit of a turbine engine, comprising:
a first end coupled to the turbine engine;
a second end; and
a body extending from the first end to the second end, the body including an interior surface and an exterior surface, wherein at least one of the interior surface or the exterior surface includes a protrusion configuration.

2. The conduit of the turbine engine of claim 1, wherein the protrusion configuration comprises a plurality of protrusions spaced apart axially along the interior surface, and wherein, optionally, the protrusion configuration comprises rows of the plurality of protrusions spaced apart laterally along the interior surface.

3. The conduit of the turbine engine of claim 2, wherein:
each protrusion in the plurality of protrusions comprises a first diameter in a X-direction, a second diameter in a Y-direction, and a height of protrusion, the height of protrusion measured from the interior surface to a maximum height of the protrusion, and
the first diameter in the X-direction and the second diameter in the Y-direction are each between 0.007 inches (0.18 cm) and 2.9 inches (7.4 cm), and the height of protrusion is between 0.001 inches (0.0025 cm) and 1.3 inches (3.3 cm).

4. The conduit of the turbine engine of claim 2 or 3, wherein:
each protrusion in the plurality of protrusions includes a continuous rib, and
the continuous rib extends in one of a circumferential direction around the interior surface or an angled direction relative to the circumferential direction.

5. The conduit of the turbine engine of any of claims 2, 3 or 4,
wherein each protrusion in the plurality of protrusions includes a broken rib, and
wherein the broken rib forms one of a V-shape, an angled circumferential and longitudinal line, and a circumferential line on the interior surface.

6. The conduit of the turbine engine of any preceding claim , wherein the protrusion configuration includes a first protrusion configuration disposed on the exterior surface adjacent the first end and a second protrusion configuration disposed on the interior surface adjacent the second end.

7. A gas turbine engine, comprising:
a fan section;
a turbine section; and
a conduit coupled to the fan section and the turbine section, the conduit including:
an inlet coupled to the turbine section;
an outlet coupled to the fan section; and
a body extending between the inlet and the outlet, the body including a protrusion configuration along one of an exterior surface of the body or an interior surface of the body.

8. The gas turbine engine of claim 7, wherein the protrusion configuration comprises a plurality of protrusions spaced apart axially along the exterior surface, and wherein, optionally, the protrusion configuration comprises rows of the plurality of protrusions spaced apart circumferentially along the exterior surface.

9. The gas turbine engine of claim 8, wherein:
each protrusion in the plurality of protrusions comprises a first diameter in a X-direction, a second diameter in a Y-direction, and a height of protrusion, the height of protrusion measured from the exterior surface to a maximum height of the protrusion, and
the first diameter in the X-direction and the second diameter in the Y-direction are each between 0.007 inches (0.18 cm) and 2.9 inches (7.4 cm), and the height of protrusion is between 0.001 inches (0.0025 cm) and 1.3 inches (3.3 cm).

10. The gas turbine engine of claim 8 or 9, wherein each protrusion in the plurality of protrusions includes one of a continuous rib and a broken rib.

11. A gas turbine engine, comprising:
a first section;
a second section adjacent the first section; and
a conduit fluidly coupled to the first section and the second section, the conduit including:
an inlet fluidly coupled to the first section;
an outlet fluidly coupled to the second section; and
a body fluidly coupled to the inlet and the outlet, the body including a protrusion configuration along at least one of an interior surface of the body or an exterior surface of the body.

12. The gas turbine engine of claim 11, wherein the protrusion configuration comprises a plurality of protrusions spaced apart axially along the exterior surface; and/or
wherein the protrusion configuration includes a plurality of protrusions spaced apart axially along the interior surface.

13. The gas turbine engine of claim 12, wherein each protrusion in the plurality of protrusions comprises a first diameter in a X-direction, a second diameter in a Y-direction, and a height of protrusion, the height of protrusion measured from the exterior surface to a maximum height of the protrusion, and
the first diameter in the X-direction and the second diameter in the Y-direction are each between 0.007 inches (0.18 cm) and 2.9 inches (7.4 cm), and the height of protrusion is between 0.001 inches (0.0025 cm) and 1.3 inches (3.3 cm).

14. The gas turbine engine of claim 11, 12 or 13, wherein the conduit is configured to receive a first fluid from the first section and supply the first fluid to the second section, and wherein, optionally, heat is transferred from the first fluid in transit from the first section to the second section.

15. The gas turbine engine of any of claims 11 to 14, wherein the first section is one of a fan section, a compressor section, a combustor section, and a turbine section, and wherein the second section is one of the fan section, the compressor section, the combustor section, and the turbine section.
